# EUROPEAN PATENT SPECIFICATION

(11) **EP 2 104 234 B1**
(45) Date of publication and mention of the grant of the patent: **31.08.2011**
(21) Application number: 08153179.0
(22) Date of filing: 21.03.2008
(51) Int. Cl.: H03M 1/08, H04N 5/335

(54) **Analog-to-digital conversion in image sensors**
Analog-Digital-Umwandlung bei Bildsensoren
Conversion analogique-numérique dans des capteurs d'images

(43) Date of publication of application: 23.09.2009
(73) Proprietor: STMicroelectronics Limited, Marlow, Buckinghamshire SL7 1YL (GB)
(72) Inventor: Purcell, Matthew, Edinburgh Lothian EH12 7LZ (GB); Storm, Graeme, Forres IV36 2RE (GB); Qu, Min, Shanghai 200042 (CN)
(74) Representative: Lindsay, David Ian

(56) References cited:
- EP-A- 1 742 369
- EP-A- 1 874 040
- WO-A-2007/135161
- US-A1- 2004 046 685
- US-A1- 2005 092 895
- US-A1- 2005 206 752

## Description

This invention relates to analog-to-digital conversion (ADC) in an image sensor.

In common forms of image sensor, a two-dimensional array of pixels is read out row by row, the pixels of each column sharing column readout circuitry which commonly comprises correlated double sampling and ADC.

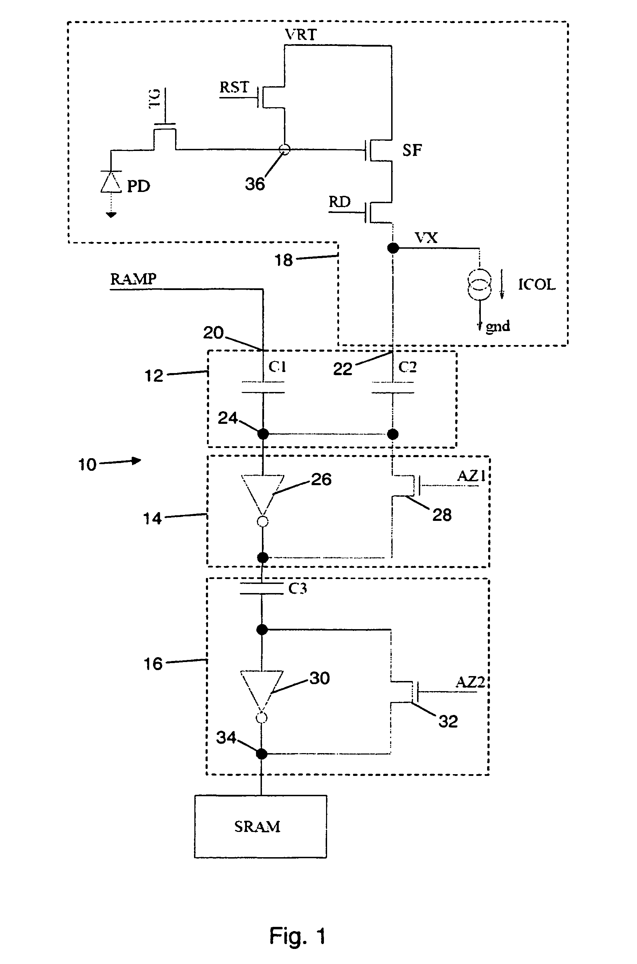

In our earlier, at present unpublished, European Patent Application 07101955.8 there is disclosed an ADC arrangement for an image sensor, one embodiment of which is shown in Fig. 1 of the present application. The structure and operation of this arrangement will be briefly described with reference to Figure 1.

An ADC 10 comprises a correlated double sampling (CDS) circuit 12 and a comparator, the comparator comprising an inverter circuit 14 and an output circuit 16. The input 22 to the CDS circuit 12 is from the column output line of a pixel array, one pixel being shown at 18 by way of example.

The CDS 12 comprises, in this example, a first capacitor C1 connected to a first input 20 and a second capacitor C2 connected to a second input 22. The first input 20 is connected to a ramp generator RAMP, which generates an appropriate time varying reference signal when required by the control means. The value of the time varying reference signal being known by the control means at any given time. The second input 22 is connected to the output of the pixel 18. The first and second capacitors C1, C2 are also connected to a CDS output node 24.

The inverter circuit 14, which could be a CMOS, NMOS or PMOS type inverter, comprises a first inverter 26 and, on a feedback loop from the output of the first inverter 26, a first transistor 28. The first transistor 28, in this instance, operates as a switch and is activated by a signal AZ1 from the control means.

The output circuit 16 comprises a third capacitor C3, connected to the output of the inverter circuit 14, a second inverter 30 and, on a feedback loop from the output of the second inverter 30, a second transistor 32. The second transistor 32, in this instance, operates as a switch and is activated by a signal AZ2 from the control means. The output circuit 16 stores the value of the pixel 18 in a memory SRAM.

The comparator (inverter circuit 14 and an output circuit 16) can be described as a summing comparator, in that it adds the two input values RAMP and VX. If RAMP+VX is greater than zero, the output of the comparator goes high, and, if RAMP+VX is less than zero, the output of the comparator goes low, where zero for RAMP is the value of RAMP when VX(black) is measured and zero for VX is VX(black).

The arrangement of Fig. 1 was devised to mitigate sample and hold noise caused by sample and hold capacitors of a correlated double sample circuit, more commonly known as kT/C noise, and means that to reduce noise by two, capacitor size requires to go up by four. As such, size or noise limits are placed on the design of the image sensor. In the arrangement of Fig. 1, the kT/C noise of the sample capacitors, C1 and C2, is mitigated by removing the requirement to hold. That is, the capacitors C1 and C2 are continuously connected to the ramp generator and VX respectively and, as such, there is a less kT/C noise generated than if a hold operation was performed. This allows C1 and C2 to be reduced in size.

Although this prior arrangement provides advantages over the prior art, it has been found to have some deficiencies when applied to large arrays and/or high speeds. This arises particularly where the scene being imaged is "flat", that is one with little contrast. In this situation, a large number of inverters fire at the same time; this causes a lot of current to pass through the ground plane which in turn causes the ground plane voltage to rise. The rise in ground plane affects column capacitors differently across the x-direction of the array, causing an effect in the resulting image sometimes referred to as "x-droop". This can be counteracted by using wide power tracks, but such an approach is not area efficient in larger arrays.

One object of the present invention is to provide an ADC arrangement which overcomes this problem while retaining the advantages of the prior arrangement in relation to a combination of simplicity, good performance, and efficient use of area.

US2004/0046685 describes a signal processing circuit which outputs a digital word responsive to incident light. The circuit includes an analog integrated circuit having a first input terminal receiving a first analog signal during a first active period of a first switching signal and a second input terminal receiving a time varying reference signal. The circuit further comprises an inverter circuit inverting and amplifying an output of the analog integrated circuit responsive to an activated enable signal; and an output circuit generating the digital word.

EP1742369 describes an electronic apparatus comprising a CMOS image sensor and a signal processor operable to process an output signal from the CMOS image sensor. The image sensor comprises a comparator which compares a reference signal generated by a reference signal generator with a signal transmitted from an imaging region.

US2005/0206752 describes a method and circuit for performing Correlated Double Sub-Sampling (CDSS) of pixels in an active pixel sensor array. The circuit comprises analog to digital converters for converting a differential voltage between a reset voltage and an image signal voltage to digital pixel data.

EP1874040 describes an image processing circuit for reducing noise. The circuit comprises a Correlated Double Sampling circuit for taking a potential difference between a pixel signal at a reset of an image pickup device and a pixel signal after exposure, and an analog to digital conversion circuit.

WO2007/135161 describes an image sensor circuit comprising a CMOS image sensor and a readout circuitry. The readout circuitry comprises storage means with a CDS stage for storing signals read out from the pixels of the image sensor at two different time instants between two subsequent reset phases, and an analog to digital converter. The CDS stage comprises a subtracting means for subtracting the stored signals from each other and the result is fed to the analog to digital converter as a differential signal.

US2005/0092895 describes a circuit and method for reducing kTC noise in CMOS imagers while minimizing power dissipation. CDS is performed within each pixel such that the reset voltage and the integration voltage are sampled and stored within the pixel before being forwarded to a differential amplifier for subtraction.

Accordingly, the present invention provides an image sensor having a pixel array and comprising:
a correlated double sample circuit comprising:
   a first input for receiving an analogue signal from a pixel of the pixel array, the analogue signal varying during a pixel readout period which comprises a first, reset, period and second, read, period, wherein the analogue signal has a first level during said first reset period and a second level during said second read period;
   a second input for receiving a time variant reference signal provided by a time variant reference circuit; and
   first and second sample capacitors; and
   a comparator circuit for comparing the time variant reference signal and the analogue signal and providing an output when the time variant reference signal corresponds to the analogue signal;
   wherein the time variant reference signal is constantly and continuously connected to the first sample capacitor and that the analogue signal is constantly and continuously connected to the second sample capacitor of the correlated double sample circuit during both the first reset period and the second read period; and wherein the comparator circuit comprises a differential amplifier having one input receiving a combination of the analogue signal and the time variant reference signal, and another input receiving a fixed reference signal.

The use of a differential amplifier as first stage of the output circuit reduces the effect of ground bounce and hence reduces x-droop.

The differential amplifier is typically a long tail pair.

Preferably the output of the differential amplifier is connected to an inverter via a further capacitor.

The fixed reference signal is preferably provided by sampling and holding a reference voltage, said sampling being performed during autozeroing of the pixel array. This eliminates the effect of any noise present in the reference voltage.

The image sensor is particularly suitable to be incorporated in a mobile device; for example a mobile phone having a camera, a personal digital assistant having a camera, a digital camera, an optical pointing device, (such as an optical mouse), an endoscope apparatus, or an ambient light sensor.

From another aspect, the invention provides a method of converting an analogue signal from an image sensor pixel, during a pixel readout period which comprises a first, reset, period and second, read, period, using an analogue to digital converter circuit comprising a correlated double sampling circuit having first and second sample capacitors and a time variant reference circuit enabled to provide a time variant reference signal; the method comprising the steps of:
i) resetting the pixel, thereby sampling an analogue signal equivalent to a pixel reset voltage onto the second capacitor;
ii) removing the pixel from reset, wherein the analogue signal is corrected for pixel reset noise on the second capacitor;
iii) integrating light received on the pixel, wherein the signal is reduced according to the amount of light received;
iv) providing the time variant reference signal;
v) comparing the analogue signal with the time variant reference signal; and vi) outputting an output when the variant reference signal corresponds to the analogue signal;
wherein the first sample capacitor is constantly and continuously connected to the time variant reference signal and the second sample capacitor is constantly and continuously connected to the analogue signal during both the first reset period and the second read period; and wherein said comparing v) is effected by applying a combination of the analogue signal and the time variant reference signal to one input of a differential amplifier, and applying a fixed reference signal to another input of the differential amplifier.

An embodiment of the invention will now be described, by way of example only, with reference to the drawings, in which:
Fig. 1 is a schematic of an embodiment of our prior, at present unpublished, European Patent Application 07101955.8; and
Fig. 2 is a [similar] schematic of one embodiment of the present invention.

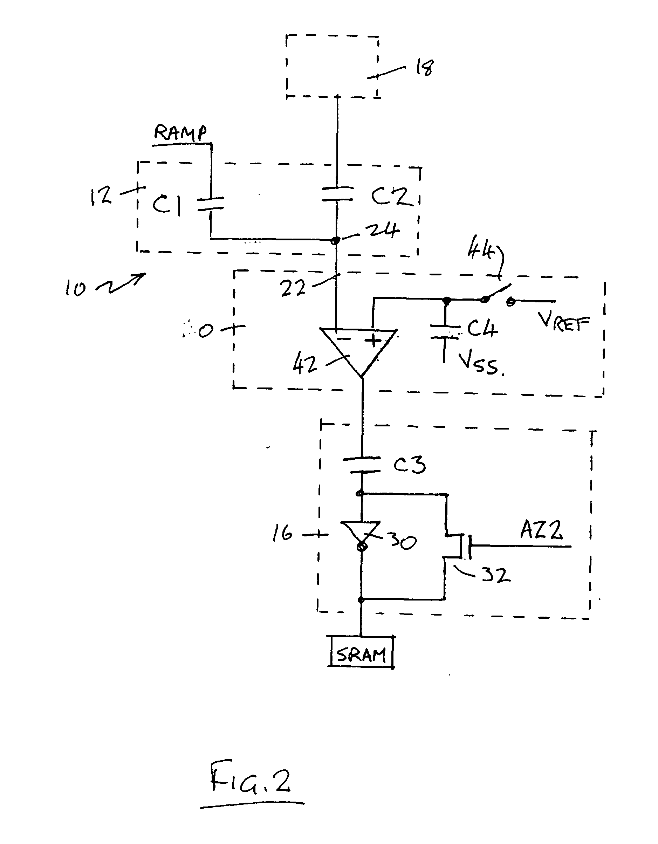

Fig. 1 has been described above. Referring now to Fig. 2 (in which the pixel 18 has been omitted for simplicity), the inverter circuit 14 is replaced by a circuit 40 which comprises a differential amplifier 42, which will typically be a long tail pair. The differential amplifier is autobiased by a reference voltage Vref. In order to eliminate line noise artefacts, which would be introduced by a noisy reference voltage, the reference voltage is sampled and learned during autozeroing of the pixel array; this is accomplished by a switch 44 (which will typically be a transistor) closing to sample Vref onto a capacitor C4.

The use of a differential amplifier as the first stage makes the output circuit more resistant to ground bounce, leading to a reduction in x-droop.

## Claims

1. An image sensor (10) having a pixel array and comprising:
a correlated double sample circuit (12) comprising:
a first input for receiving an analogue signal from a pixel (18) of the pixel array, the analogue signal varying during a pixel readout period which comprises a first, reset, period and second, read, period, wherein the analogue signal has a first level during said first reset period and a second level during said second read period;
a second input for receiving a time variant reference signal (RAMP) provided by a time variant reference circuit; and
first (C1) and second (C2) sample capacitors; and
a comparator circuit (40) for comparing the time variant reference signal (RAMP) and the analogue signal and providing an output when the time variant reference signal corresponds to the analogue signal;
the image sensor (10) **characterised in that**:
the time variant reference signal (RAMP) is constantly and continuously connected to the first sample capacitor (C1) and that the analogue signal is constantly and continuously connected to the second sample capacitor (C2) of the correlated double sample circuit (12) during both the first reset period and the second read period;
and that the comparator circuit comprises a differential amplifier (42) having one input receiving a combination of the analogue signal and the time variant reference signal (RAMP), and another input receiving a fixed reference signal (V_{REF}).

2. An image sensor (10) according to claim 1, in which the differential amplifier (42) is a long tail pair.

3. An image sensor (10) according to claim 1 or claim 2, in which the output of the differential amplifier (42) is connected to an inverter (30) via a further capacitor (C3).

4. An image sensor (10) according to any preceding claim, in which the fixed reference signal is provided by sampling and holding a reference voltage, said sampling being performed during autozeroing of the pixel array.

5. A mobile device comprising an image sensor (10) according to any of claims 1 to 4.

6. A mobile device as claimed in claim 5, wherein the mobile device is a mobile phone having a camera including the image sensor (10).

7. A mobile device as claimed in claim 5, wherein the mobile device is a personal digital assistant having a camera including the image sensor (10).

8. A mobile device as claimed in claim 5, wherein the mobile device is a digital camera.

9. An optical pointing device comprising an image sensor (10) according to claims 1 to 4.

10. An optical pointing device claimed in claim 9, wherein the optical pointing device is an optical mouse.

11. An endoscope apparatus comprising an image sensor (10) according to claims 1 to 4.

12. An ambient light sensor comprising an image sensor (10) according to claims 1 to 4.

13. A method of converting an analogue signal from a pixel (18) of an image sensor (10) to a digital signal, during a pixel readout period which comprises a first, reset, period and second, read, period, using an analogue to digital converter circuit comprising a correlated double sampling circuit (12) having first (C1) and second (C2) sample capacitors and a time variant reference circuit enabled to provide a time variant reference signal (RAMP); the method comprising the steps of:
i) resetting the pixel (18), thereby sampling an analogue signal equivalent to a pixel reset voltage onto the second capacitor (C2);
ii) removing the pixel (18) from reset, wherein the analogue signal is corrected for pixel reset noise on the second capacitor (C2);
iii) integrating light received on the pixel (18), wherein the signal is reduced according to the amount of light received;
iv) providing the time variant reference signal (RAMP);
v) comparing the analogue signal with the time variant reference signal (RAMP); and
vi) outputting an output when the variant reference signal corresponds to the analogue signal;
the method **characterised in that**:
the first sample capacitor (C1) is constantly and continuously connected to the time variant reference signal (RAMP) and the second sample capacitor (C2) is constantly and continuously connected to the analogue signal during both the first reset period and the second read period;
and that said comparing v) is effected by applying a combination of the analogue signal and the time variant reference signal (RAMP) to one input of a differential amplifier (42), and applying a fixed reference signal (V_{REF}) to another input of the differential amplifier.

## Patentansprüche

1. Ein Bildsensor (10), der ein Pixelarray aufweist und Folgendes beinhaltet:
eine Korrelations-Doppelabtastschaltung (12), die Folgendes beinhaltet:
einen ersten Eingang zum Empfangen eines Analogsignals von einem Pixel (18) des Pixelarrays, wobei sich das Analogsignal während einer Pixelausleseperiode, die eine erste Rücksetzperiode und eine zweite Leseperiode beinhaltet, verändert, wobei das Analogsignal während der ersten Rücksetzperiode einen ersten Pegel und während der zweiten Leseperiode einen zweiten Pegel aufweist;
einen zweiten Eingang zum Empfangen eines zeitveränderlichen Referenzsignals (RAMP), das von einer zeitveränderlichen Referenzschaltung bereitgestellt wird, und
einen ersten (C1) und einen zweiten (C2) Abtastkondensator; und
eine Komparatorschaltung (40) zum Vergleichen des zeitveränderlichen Referenzsignals (RAMP) und des Analogsignals und Bereitstellen eines Ausgangs, wenn das zeitveränderliche Referenzsignal dem Analogsignal entspricht;
wobei der Bildsensor (10) **dadurch gekennzeichnet ist, dass**:
das zeitveränderliche Referenzsignal (RAMP) dauernd und kontinuierlich mit dem ersten Abtastkondensator (C1) verbunden ist und das Analogsignal während der ersten Rücksetzperiode und der zweiten Leseperiode dauernd und kontinuierlich mit dem zweiten Abtastkondensator (C2) der Korrelations-Doppelabtastschaltung (12) verbunden ist;
und dass die Komparatorschaltung einen Differenzverstärker (42) beinhaltet, der einen Eingang aufweist, der eine Kombination des Analogsignals und des zeitveränderlichen Referenzsignals (RAMP) empfängt und einen anderen Eingang aufweist, der ein festes Referenzsignal (V_{REF}) empfängt.

2. Bildsensor (10) gemäß Anspruch 1, wobei es sich bei dem Differenzverstärker (42) um ein Long-Tail-Pair handelt.

3. Bildsensor (10) gemäß Anspruch 1 oder Anspruch 2, wobei der Ausgang des Differenzverstärkers (42) über einen weiteren Kondensator (C3) mit einem Wechselrichter (30) verbunden ist.

4. Bildsensor (10) gemäß einem der vorhergehenden Ansprüche, wobei das feste Referenzsignal durch Abtasten und Halten einer Referenzspannung bereitgestellt wird, wobei das Abtasten während der Selbsteichung des Pixelarrays ausgeführt wird.

5. Eine mobile Vorrichtung, die einen Bildsensor (10) gemäß einem der Ansprüche 1 bis 4 beinhaltet.

6. Mobile Vorrichtung gemäß Anspruch 5, wobei es sich bei der mobilen Vorrichtung um ein Mobiltelefon handelt, das eine den Bildsensor (10) umfassende Kamera aufweist.

7. Mobile Vorrichtung gemäß Anspruch 5, wobei es sich bei der mobilen Vorrichtung um einen persönlichen digitalen Assistenten handelt, der eine den Bildsensor (10) umfassende Kamera aufweist.

8. Mobile Vorrichtung gemäß Anspruch 5, wobei es sich bei der mobilen Vorrichtung um eine Digitalkamera handelt.

9. Eine optische Zeigevorrichtung, die einen Bildsensor (10) gemäß den Ansprüchen 1 bis 4 beinhaltet.

10. Optische Zeigevorrichtung gemäß Anspruch 9, wobei es sich bei der optischen Zeigevorrichtung um eine optische Maus handelt.

11. Eine Endoskopapparatur, die einen Bildsensor (10) gemäß den Ansprüchen 1 bis 4 beinhaltet.

12. Ein Umgebungslichtsensor, der einen Bildsensor (10) gemäß den Ansprüchen 1 bis 4 beinhaltet.

13. Ein Verfahren zum Umwandeln eines Analogsignals von einem Pixel (18) eines Bildsensors (10) in ein Digitalsignal während einer Pixelausleseperiode, die eine erste Rücksetzperiode und eine zweite Leseperiode aufweist, unter Verwendung einer Analog-Digital-Umwandlungsschaltung, die eine Korrelations-Doppelabtastschaltung (12) beinhaltet, die einen ersten (C1) und einen zweiten (C2) Abtastkondensator und eine zum Bereitstellen eines sich zeitlich verändernden Referenzsignals (RAMP) freigegebene sich zeitlich verändernde Referenzschaltung aufweist, wobei das Verfahren folgende Schritte beinhaltet:
i) Rücksetzen des Pixels (18) und dadurch Abtasten eines Analogsignals, das zu einer Pixelrücksetzspannung äquivalent ist, auf den zweiten Kondensator (C2);
ii) Entfernen des Pixels (18) von der Rücksetzung, wobei das Analogsignal auf dem zweiten Kondensator (C2) auf Pixelrücksetzrauschen korrigiert wird;
iii) Integrieren von auf dem Pixel (18) empfangenem Licht, wobei das Signal gemäß der Menge von empfangenem Licht reduziert wird;
iv) Bereitstellen des sich zeitlich verändernden Referenzsignals (RAMP);
v) Vergleichen des Analogsignals mit dem sich zeitlich verändernden Referenzsignal (RAMP); und
vi) Ausgeben eines Ausgangs, wenn das zeitveränderliche Referenzsignal dem Analogsignal entspricht;
wobei das Verfahren **dadurch gekennzeichnet ist, dass**:
der erste Abtastkondensator (C1) dauernd und kontinuierlich mit dem zeitveränderlichen Referenzsignal (RAMP) verbunden ist und der zweite Abtastkondensator (C2) während der ersten Rücksetzperiode und der zweiten Leseperiode dauernd und kontinuierlich mit dem Analogsignal verbunden ist;
und dass das Vergleichen v) durch Anlegen einer Kombination des Analogsignals und des zeitveränderlichen Referenzsignals (RAMP) an einen Eingang eines Differenzverstärkers (42) und Anlegen eines festen Referenzsignals (V_{REF}) an einen anderen Eingang des Differenzverstärkers bewirkt wird.

## Revendications

1. Un capteur d'image (10) ayant une matrice de pixels et comprenant :
un circuit d'échantillonnage double corrélé (12) comprenant :
une première entrée pour recevoir un signal analogique provenant d'un pixel (18) de la matrice de pixels, le signal analogique variant pendant une période de lecture de pixel qui comprend une première période, de réinitialisation, et une deuxième période, de lecture, dans lequel le signal analogique a un premier niveau pendant ladite première période de réinitialisation et un deuxième niveau pendant ladite deuxième période de lecture ;
une deuxième entrée pour recevoir un signal de référence variable dans le temps (RAMP), fourni par un circuit de référence variable dans le temps ; et
des premier (C1) et deuxième (C2) condensateurs d'échantillonnage ; et
un circuit comparateur (40) pour comparer le signal de référence variable dans le temps (RAMP) et le signal analogique et fournir une sortie lorsque le signal de référence variable dans le temps correspond au signal analogique ;
le capteur d'image (10) **caractérisé en ce que** :
le signal de référence variable dans le temps (RAMP) est de façon constante et continue connecté au premier condensateur d'échantillonnage (C1) et que le signal analogique est de façon constante et continue connecté au deuxième condensateur d'échantillonnage (C2) du circuit d'échantillonnage double corrélé (12) pendant la première période de réinitialisation et la deuxième période de lecture ;
et **en ce que** le circuit comparateur comprend un amplificateur différentiel (42) ayant une entrée recevant une combinaison du signal analogique et du signal de référence variable dans le temps (RAMP), et une autre entrée recevant un signal de référence fixe (V_{REF}).

2. Un capteur d'image (10) selon la revendication 1, dans lequel l'amplificateur différentiel (42) est une paire différentielle.

3. Un capteur d'image (10) selon la revendication 1 ou la revendication 2, dans lequel la sortie de l'amplificateur différentiel (42) est connectée à un inverseur (30) par le biais d'un condensateur supplémentaire (C3).

4. Un capteur d'image (10) selon n'importe quelle revendication précédente, dans lequel le signal de référence fixe est fourni en échantillonnant et maintenant une tension de référence, ledit échantillonnage étant réalisé pendant la remise à zéro de la matrice de pixels.

5. Un dispositif portable comprenant un capteur d'image (10) selon l'une quelconque des revendications 1 à 4.

6. Un dispositif portable tel que revendiqué dans la revendication 5, dans lequel le dispositif portable est un téléphone portable ayant une caméra incluant le capteur d'image (10).

7. Un dispositif portable tel que revendiqué dans la revendication 5, dans lequel le dispositif portable est un assistant personnel numérique ayant une caméra incluant le capteur d'image (10).

8. Un dispositif portable tel que revendiqué dans la revendication 5, dans lequel le dispositif portable est une caméra numérique.

9. Un dispositif de pointage optique comprenant un capteur d'image (10) selon les revendications 1 à 4.

10. Un dispositif de pointage optique tel que revendiqué dans la revendication 9, dans lequel le dispositif de pointage optique est une souris optique.

11. Un appareil endoscope comprenant un capteur d'image (10) selon les revendications 1 à 4.

12. Un capteur de lumière ambiante comprenant un capteur d'image (10) selon les revendications 1 à 4.

13. Une méthode pour convertir un signal analogique provenant d'un pixel (18) d'un capteur d'image (10) en un signal numérique, pendant une période de lecture de pixel qui comprend une première période, de réinitialisation, et une deuxième période, de lecture, à l'aide d'un circuit convertisseur analogique-numérique comprenant un circuit d'échantillonnage double corrélé (12) ayant des premier (C1) et deuxième (C2) condensateurs d'échantillonnage et un circuit de référence variable dans le temps configuré pour fournir un signal de référence variable dans le temps (RAMP) ; la méthode comprenant les étapes consistant à :
(i) réinitialiser le pixel (18), échantillonnant de ce fait un signal analogique équivalent à une tension de réinitialisation de pixel sur le deuxième condensateur(C2);
(ii) supprimer le pixel (18) de la réinitialisation, dans laquelle le bruit de réinitialisation de pixel dans le signal analogique est corrigé sur le deuxième condensateur(C2);
(iii) intégrer de la lumière reçue sur le pixel (18), dans laquelle le signal est réduit en fonction de la quantité de lumière reçue ;
(iv) fournir le signal de référence variable dans le temps (RAMP);
(v) comparer le signal analogique au signal de référence variable dans le temps (RAMP) ; et
(vi) sortir une sortie lorsque le signal de référence variable dans le temps correspond au signal analogique ;
la méthode **caractérisée en ce que** :
le premier condensateur d'échantillonnage (C1) est de façon constante et continue connecté au signal de référence variable dans le temps (RAMP) et le deuxième condensateur d'échantillonnage (C2) est de façon constante et continue connecté au signal analogique pendant à la fois la première période de réinitialisation et la deuxième période de lecture ;
et **en ce que** ladite comparaison v) est réalisée en appliquant une combinaison du signal analogique et du signal de référence variable dans le temps (RAMP) à une entrée d'un amplificateur différentiel (42), et en appliquant un signal de référence fixe (V_{REF}) à une autre entrée de l'amplificateur différentiel.
